# EUROPÄISCHE PATENTSCHRIFT

(11) **EP 0 737 502 B1**
(45) Veröffentlichungstag und Bekanntmachung des Hinweises auf die Patenterteilung: **24.06.1998**
(21) Anmeldenummer: 96103605.0
(22) Anmeldetag: 08.03.1996
(51) Int. Cl.: B01D 35/147, B01D 35/157

(54) **Filter zur Reinigung eines hydraulischen Mediums**
Filter for the purification of a hydraulic medium
Filtre pour la purification d'un milieu hydraulique

(30) Priorität: 15.04.1995 DE 19514224
(43) Veröffentlichungstag der Anmeldung: 16.10.1996
(73) Patentinhaber: KNECHT FILTERWERKE GMBH, 70376 Stuttgart (DE)
(72) Erfinder: Gröner, Alfred, 74613 Öhringen (DE)
(74) Vertreter: Patentanwalts-Partnerschaft Rotermund + Pfusch

(56) Entgegenhaltungen:
- DE-A- 4 221 897
- GB-A- 787 408
- GB-A- 1 054 647
- US-A- 3 485 368

## Beschreibung

Die Erfindung bezieht sich auf ein Filter zur Reinigung eines mit variablem Volumen zuströmenden, hydraulischen Mediums, das in mehrere Teilströme unterteilt wird.

Solche Filter, die sowohl im Vorlauf zu als auch im Rücklauf von Arbeitshydrauliken angeordnet sein können, sind in verschiedenen Ausführungen bekannt (DE 44 04 760 A1).

Einerseits kann der eine Teilstrom durch ein Haupt-Filter und der andere Teilstrom durch eine Bypass-Leitung mit eingefügtem Zusatz-Filter geleitet werden.

Andererseits kann das Medium durch ein Filter mit mehreren Filterkörpern unterschiedlicher Filterfeinheit geleitet werden, wobei sich zuströmendes, hydraulisches Medium nach Maßgabe des Strömungswiderstandes der verschiedenen Filterkörper in diese durchströmende Teilströme aufteilt.

GB-A-1,054,647 beschreibt ein Filter zur Reinigung eines mit variablem Volumen zuströmenden, hydraulischen Mediums, das durch einen in der Zuleitung zu dem Filter angeordneten Stromteiler in einen Teilstrom konstanten Volumens und in einen Teilstrom variablen Volumens unterteilt wird, wobei der Stromteiler eine Einströmkammer für das mit variablem Volumen einströmende Medium, eine erste Abströmkammer für das mit variablem Volumen abströmende Medium und eine zweite Abströmkammer für das mit konstantem Volumen abströmende Medium enthält, und wobei beide abströmende Teilströme wieder zusammengeführt werden.

Keine diese bekannten Ausführungen zielt darauf ab, einen Teilstrom konstanten Volumens durch einen diesem zugeordneten Filterkörper zu leiten, um die gute Filterwirkung eines auf ein bestimmtes, durchströmendes Volumen abgestimmten Filterkörpers nutzbar zu machen.

Aufgabe der Erfindung ist es, eine auf der vorgenannten Eigenschaft von Filterkörpern beruhende Verbesserung der Filterwirkung auch für mit variablem Volumen zuströmende, hydraulische Medien auszunutzen.

Diese Aufgabe ist bei einem Filter der eingangs genannten Art dadurch gelöst, daß in der Zuleitung zu dem Filter ein Stromteiler angeordnet ist, der das hydraulische Medium in einen Teilstrom konstanten Volumens und in einen Teilstrom variablen Volumens unterteilt.

Die Variabilität des Volumens des dem Filter zuströmenden hydraulischen Mediums kann dabei insbesondere durch unterschiedlichen Leistungsbedarf der vor- oder nachgeschalteten Arbeitshydraulik und dementsprechend unterschiedlichen Druck des hydraulischen Mediums bedingt sein.

Um die gewünschte Bildung eines Teilstromes mit konstantem Volumen auch bei variablem Druck des zuströmenden hydraulischen Mediums zu erreichen, ist es vorteihaft, daß der Stromteiler eine Einströmkammer für das mit variablem Volumen einströmende Medium, eine erste Abströmkammer für das mit variablem Volumen abströmende Medium und eine zweite Abströmkammer für das mit konstantem Volumen abströmende Medium enthält, daß ein rückseitig von einer Feder belastetes Ventil den Durchfluß des Mediums von der Einströmkammer zu der ersten Abströmkammer steuernd öffnet oder schließt, daß eine Durchflußverbindung von der Einströmkammer zu der zweiten Abströmkammer über ein durch einen Kolben gesteuertes Drosselventil und danach eine Blende hergestellt ist, und daß der das Drosselventil steuernde Kolben von einer weiteren Feder und in gleicher Richtung von dem Druck des Mediums in der zweiten Abströmkammer sowie in Gegenrichtung von dem Druck des Mediums in der Einströmkammer belastet ist.

Der in der Einströmkammer anstehende Druck bewirkt ein mehr oder weniger weites Öffnen des durch das Ventil abgeschlossenen Durchflusses des Teilstromes variablen Volumens zu der ersten Abströmkammer nach Maßgabe der rückseitig das Ventil belastenden Feder. Der in der Einströmkammer anstehende Druck wirkt im Schließsinne des Drosselventils auf den dieses steuernden Kolben in Gegenrichtung zu der diesen belastenden weiteren Feder und den in gleicher Richtung wirkenden Druck in der zweiten Abströmkammer. In der Durchflußverbindung von der Einströmkammer zu der zweiten Abströmkammer stellt sich in Abhängigkeit von der Stellung des Drosselventils und dem Durchmesser der Blende vor letzterer ein Vordruck ein, der in Abhängigkeit von dem Durchmesser der Blende einen Volumenstrom in die zweite Abströmkammer erzeugt. Mit steigendem Druck in der zweiten Abströmkammer betätigt der das Drosselventil steuernde Kolben dieses im Öffnungssinne. Die Differenz zwischen dem Vordruck vor der Blende und dem Druck in der zweiten Abströmkammer wird dadurch etwa konstant gehalten, wodurch ein etwa konstanter Volumenstrom zu der zweiten Abströmkammer erzeugt wird.

Eine Verbesserung der Konstanz des Volumenstromes zu der zweiten Abströmkammer ist dadurch zu erzielen, daß das Ventil als Kolbenventil ausgebildet und rückseitig zusätzlich von dem Druck des Mediums in der zweiten Abströmkammer belastet ist.

Durch die zusätzliche rückseitige Belastung des Kolbenventils durch den Druck in der zweiten Abströmkammer wird die Differenz zwischen den Drücken in der Einströmkammer und der zweiten Abströmkammer weitgehend konstant gehalten. Mit steigendem Druck in der ersten Abströmkammer steigt auch der Druck in der Einströmkammer und durch den das Drosselventil steuernden Kolben wird der Vordruck vor der Blende und damit auch der Volumenstrom in die zweite Abströmkammer konstant gehalten. Mit steigendem Druckin der zweiten Abströmkammer wird die rückseitig auf das Kolbenventil wirkende Kraft und der Druck in der Einströmkammer entsprechend erhöht.

Je nach erforderlichem Reinigungsgrad des abströmenden, hydraulischen Mediums können in dem mit dem Stromteiler versehenen Filtergehäuse entweder beide Teilströme durch gesonderte Filterkörper geleitet und danach wieder zusammengeführt werden, oder nur der Teilstrom konstanten Volumens durch einen Filterkörper geleitet und der Teilstrom variablen Volumens ungefiltert durchgeleitet sowie danach beide Teilströme wieder zusammengeführt werden.

Solche Filter mit vorgeschalteten Stromteilern können sowohl im Vorlauf als auch im Rücklauf von einer Arbeitshydraulik angeordnet sein.

In der Zeichnung sind zwei Ausführungsbeispiele für Filter nach der Erfindung dargestellt, und zwar zeigt
- Fig. 1: einen Mittelschnitt des ersten Ausführungsbeispiels,
- Fig. 2: einen Mittelschnitt des zweiten Ausführungsbeispiels,
- Fig. 3: einen Schnitt durch den Stromteiler des zweiten Ausführungsbeispiels in einer Ausgestaltung als geschlossener Block.

Auf das eine Ende eines Filtergehäuses 1 ist ein Stromteiler 2 aufgesetzt. Das andere Ende des Filtergehäuses 1 weist einen Auslaufstutzen 3 für gereinigtes, hydraulisches Medium auf. In dem Stromteiler 2 ist eine Einströmkammer 4, eine erste Abströmkammer 5 für mit variablem Volumen abströmendes Medium und eine zweite Abströmkammer 6 für mit konstantem Volumen abströmendes Medium vorgesehen. Ein rückseitig von einer Feder 7 belastetes Ventil 8 steuert den Durchfluß von der Einströmkammer 4 zu der ersten Abströmkammer 5. Zwischen der Einströmkammer 4 und der zweiten Abströmkammer 6 ist eine Durchflußverbindung hergestellt, die ein Drosselventil 9 und eine Blende 10 enthält. Als Umrisse dargestellte Pfeile symbolisieren das einströmende, das durch den ersten Abströmraum 5 mit variablem Volumen abströmende und das durch den Auslaufstutzen 3 abströmende Medium ausgezogene Pfeile symbolisieren das durch die zweite Abströmkammer 6 mit konstantem Volumen abströmende Medium, das durch einen Filterkörper 11 strömt.

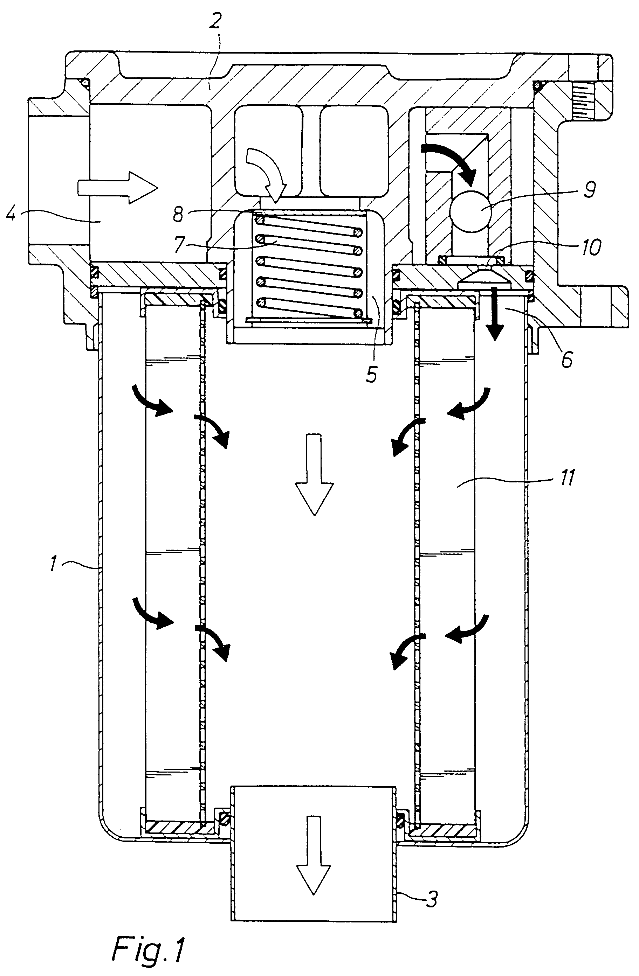

Bei dem ersten Ausführungsbeispiel (Fig. 1) wird das aus der ersten Abströmkammer 5 abströmende Medium mit dem aus der zweiten Abströmkammer 6 abströmenden, durch den Filterkörper 11 strömenden Medium zusammengeführt und strömt danach durch den Auslaufstutzen 3 aus dem Filtergehäuse 1 ab. Das Drosselventil 9 ist - in in der Zeichnung nicht dargestellter Weise - durch einen Kolben gesteuert, der in einer Richtung von einer weiteren Feder und dem Druck des Mediums in der zweiten Abströmkammer 6 und in Gegenrichtung von dem Druck des Mediums in der Einströmkammer 4 belastet ist.

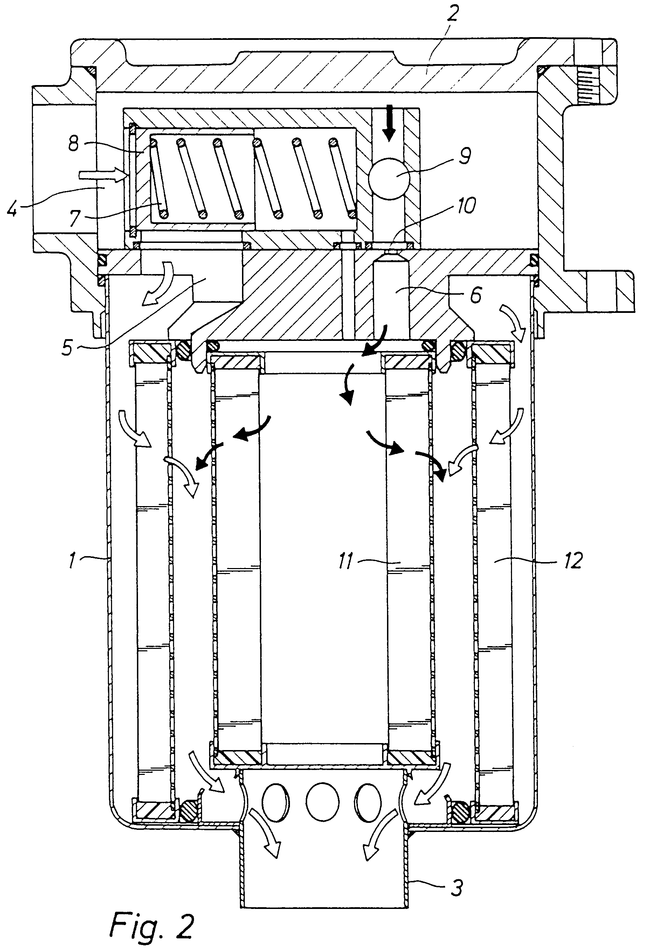

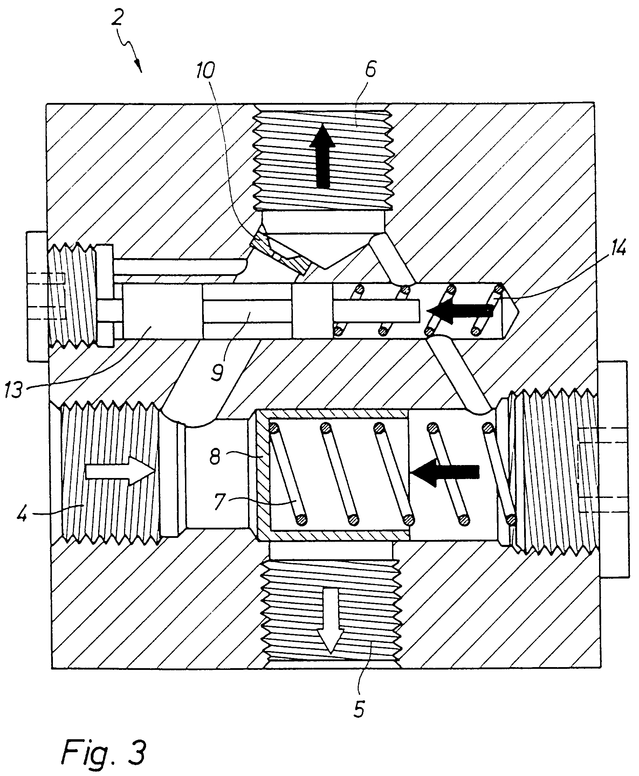

Bei dem zweiten Ausführungsbeispiel (Fig. 2 und 3) wird das aus der ersten Abströmkammer 5 abströmende, durch einen weiteren Filterkörper 12 strömende Medium mit dem aus der zweiten Abströmkammer 6 abströmenden, durch den Filterkörper 11 strömenden Medium zusammengeführt und strömt danach durch den Auslaufstutzen 3 aus dem Filtergehäuse 1 ab. Das Drosselventil 9 ist durch einen Kolben 13 gesteuert, der in der einen Richtung von einer weiteren Feder 14 und dem Druck des Mediums in der zweitenAbströmkammer 6 und in Gegenrichtung von dem Druck des Mediums in der Einströmkammer 4 belastet ist.

## Patentansprüche

1. Filter zur Reinigung eines mit variablem Volumen zuströmenden hydraulischen Mediums, das durch einen in der Zuleitung zu dem Filter angeordneten Stromteiler in einen Teilstrom konstanten Volumens und in einen Teilstrom variablen Volumens unterteilt wird, wobei der Stromteiler eine Einströmkammer für das mit variablem Volumen einströmende Medium, eine erste Abströmkammer für das mit variablem Volumen abströmende Medium und eine zweite Abströmkammer für das mit konstantem Volumen abströmende Medium enthält, und wobei beide abströmende Teilströme wieder zusammengeführt werden, dadurch gekennzeichnet, daß ein rückseitig von einer Feder (7) belastetes Ventil (8) den Durchfluß des Mediums von der Einströmkammer (4) zu der ersten Abströmkammer (5) steuernd öffnet oder schließt, daß eine Durchflußverbindung von der Einströmkammer (4) zu der zweiten Abströmkammer (6) über ein durch einen Kolben (13) gesteuertes Drosselventil (9) und danach eine Blende (10) hergestellt ist, und daß der das Drosselventil (9) steuernde Kolben (13) von einer weiteren Feder (14) und in gleicher Richtung von dem Druck des Mediums in der zweiten Abströmkammer (6) sowie in Gegenrichtung von dem Druck des Mediums in der Einströmkammer (4) belastet ist.

2. Filter nach Anspruch 1, dadurch gekennzeichnet, daß das Ventil (8) als Kolbenventil ausgebildet und rückseitig zusätzlich von dem Druck des Mediums in der zweiten Abströmkammer (6) belastet ist.

3. Filter nach Anspruch 1 oder 2 dadurch gekennzeichnet, daß in einem mit dem Stromteiler (2) versehenen Filtergehäuse (1) beide Teilströme durch gesonderte Filterkörper (11,12) geleitet werden.

4. Filter nach Anspruch 1 oder 2, dadurch gekennzeichnet, daß in einem mit dem Stromteiler (2) versehenen Filtergehäuse (1) nur der Teilstrom konstanten Volumens durch einen Filterkörper (11) geleitet und der Teilstrom variablen Volumens ungefiltert durchgeleitet werden.

5. Filter nach Anspruch 1, 2, 3 oder 4, dadurch gekennzeichnet, daß der Filter mit vorgeschaltetem Stromteiler (2) im Vorlauf zu einer Arbeitshydraulik angeordnet ist.

6. Filter nach Anspruch 1, 2, 3 oder 4, dadurch gekennzeichnet, daß der Filter mit vorgeschaltetem Stromteiler (2) im Rücklauf von einer Arbeitshydraulik angeordnet ist.

## Claims

1. Filter for cleaning a hydraulic medium which is arriving in a variable volume and is divided by a flow divider arranged in the feed pipe to the filter into a partial flow of constant volume and a partial flow of variable volume, wherein the flow divider has an inlet chamber for the medium entering in a variable volume, a first outlet chamber for the medium issuing in a variable volume and a second outlet chamber for the medium issuing in a constant volume, and wherein the two issuing partial flows are combined again, characterized in that a valve (8) loaded at the back by a spring (7) opens or closes the through-flow of the medium from the inlet chamber (4) to the first outlet chamber (5) in a controlling manner, in that the through-flow connection from the inlet chamber (4) to the second outlet chamber (6) is produced by a flow-control valve (9) controlled by a piston (13) and then a shutter (10), and in that the piston (13) controlling the flow-control valve (9) is loaded by a further spring (14) and in the same direction by the pressure of the medium in the second outlet chamber (6) and, in the opposite direction, by the pressure of the medium in the inlet chamber (4).

2. Filter according to claim 1, characterized in that the valve (8) is designed as a piston valve and is additionally loaded at the back by the pressure of the medium in the second outlet chamber (6).

3. Filter according to claim 1 or 2, characterized in that the two partial flows are conveyed through separate filter members (11, 12) in a filter casing (1) provided with the flow divider (2).

4. Filter according to claim 1 or 2, characterized in that, in a filter casing (1) provided with the flow divider (2), only the partial flow of constant volume is conveyed through a filter member (11) and the partial flow of variable volume is conveyed in unfiltered form.

5. Filter according to claim 1, 2, 3 or 4, characterized in that the filter with preceding flow divider (2) is arranged in the pre-run to an operating hydraulic unit.

6. Filter according to claim 1, 2, 3 or 4, characterized in that the filter with preceding flow divider (2) is arranged in the return from an operating hydraulic unit.

## Revendications

1. Filtre pour l'épuration d'un fluide hydraulique arrivant à débit variable qui est divisé par un diviseur de débit monté sur la conduite d'arrivée au filtre en un courant partiel de débit constant et un courant partiel de débit variable, ce diviseur de débit contenant une chambre d'entrée pour le fluide entrant à débit variable, une première chambre de sortie pour le fluide sortant à débit variable et une deuxième chambre de sortie pour le fluide sortant à débit constant, et les deux courants partiels sortants étant de nouveau réunis, caractérisé par le fait qu'un obturateur (8) chargé au dos par un ressort (7) ouvre ou ferme en commande le passage du fluide de la chambre d'entrée (4) à la première chambre de sortie (5), qu'une liaison de passage de la chambre d'entrée (4) à la deuxième chambre de sortie (6) est réalisée par un réducteur de débit (9) commandé par un piston (13) et après celui-ci par un diaphragme (10), et que le piston (13) qui commande le réducteur de débit (9) est chargé par un autre ressort (14) et dans le même sens par la pression du fluide dans la deuxième chambre de sortie (6) et dans l'autre sens par la pression du fluide dans la chambre d'entrée (4).

2. Filtre selon la revendication 1, caractérisé par le fait que l'obturateur (8) est constitué d'un piston et chargé au dos en plus par la pression du fluide dans la deuxième chambre de sortie (6).

3. Filtre selon l'une des revendications 1 et 2, caractérisé par le fait que dans un corps de filtre (1) pourvu du diviseur de débit (2), les deux courants partiels traversent des corps filtrants séparés (11, 12).

4. Filtre selon l'une des revendications 1 et 2, caractérisé par le fait que dans un corps de filtre (1) pourvu du diviseur de débit (2), seul le courant partiel de débit constant traverse un corps filtrant (11) et le courant partiel de débit variable traverse sans être filtré.

5. Filtre selon l'une des revendications 1, 2, 3 et 4, caractérisé par le fait qu'il est placé avec diviseur de débit monté en amont (2) dans l'aller à un dispositif hydraulique de travail.

6. Filtre selon l'une des revendications 1, 2, 3 et 4, caractérisé par le fait qu'il est placé avec diviseur de débit monté en amont (2) dans le retour d'un dispositif hydraulique de travail.
